# EUROPEAN PATENT SPECIFICATION

(11) **EP 0 570 503 B1**
(45) Date of publication and mention of the grant of the patent: **11.06.1997**
(21) Application number: 92906506.8
(22) Date of filing: 05.02.1992
(51) Int. Cl.: A01G 31/00

(54) **CULTURE SYSTEM FOR PLANTS**
KULTURSYSTEM FÜR PFLANZEN
SYSTEME DE CULTURE DE PLANTES

(30) Priority: 07.02.1991 NL 9100216
(43) Date of publication of application: 24.11.1993
(73) Proprietor: Rockwool/ Grodan B.V., NL-6074 NH Melick-Herkenbosch (NL)
(72) Inventor: BLOK, Christiaan, NL-2331 PG Leiden (NL); BIJ DE VAATE, Jacob Cornelis, NL-6045 AE Roermond (NL)
(74) Representative: Prins, Hendrik Willem
(86) International application number: NL9200027
(87) International publication number: WO9213442

(56) References cited:
- EP-A- 0 210 702
- GB-A- 2 026 831
- NL-A- 8 403 752
- NL-A- 8 900 206

## Description

The present invention relates to a culture system for cultivating plants, in particular cut flowers such as chrysanthemums, which plants are cultivated in great plant density and generally with a culture period which is a fraction of a year.

The invention particularly relates to a method for cultivating such plants on a plant holder, holder table, growing slab and propagating tray to be used with this method.

The rose and the cut chrysanthemum are the most important cut flower crops in the Netherlands. In contrast to the rose the cut chrysanthemum is not cultivated on an industrial scale on a synthetic growing substrate such as mineral wool, in particular rockwool, and on foamed plastics such as polyurethane.

The cut chrysanthemums are cultivated in beds wherein a plant density is employed of about 50-70 plants per m². In specialised plant growing establishments cuttings are obtained from so-called mother plants which cuttings are further propagated in peat blocks with dimensions of 4x4x3 cm. The rooted cutting is sold in the peat block to the cut flower growers.

Chrysanthemum culture is the subject of discussion at the moment since their cultivation is one of the most polluting. The use of ground disinfecting means and plant pesticides as well as the discharge of drain water containing nutrient salts are relatively great.

The culture of cut flowers in a high density with a relatively short culture period is uneconomic with known synthetic substrate culture systems.

In comparison with the culture density for the tomato (2 tomato plants per m² per year) and the rose (10 rose plants per m² per 5 years), the culture density for the chrysanthemum is very high, namely 50 plants per m² per quarter year (four crops per year) or 200 chrysanthemum plants per m² per year.

The invention has for its object to enable economically efficient culture of the above stated plants, while the above mentioned drawbacks are avoided by making use of a synthetic growth substrate system. This is achieved in that the constant culture volume necessary for the plant does not substantially extend in horizontal direction, which is limiting for the plant density, but in height direction, a direction which is not limiting in cultivating and propagating plants.

The method according to the invention for cultivating plants, in particular cut plants such as chrysanthemums, comprises culturing of the plants in an elongate growing slab, wherein in the cultivating position the breadth b of the planting surface of the growing slab is smaller than the height h of the growing slab wherein the ratio of the breadth b to the height h lies between 1:1.2 and 1:5. By using growing slabs which are in fact placed on their long side, an enormous space-saving is achieved. Another important advantage is that in its cultivating position the growing slab is not only the starting volume for the plants but also the end volume. The conventional use of growing plugs and growing blocks can hereby be dispensed with. A number of potential dangers are moreover avoided which are associated with a decelerated growth speed at the transition from the growing plug to the growing block and then to the growing slab. Cultivation can also continue longer during propagation since during propagation the end volume is already available to the plant. This will mean that the culture period can be further shortened and even the number of harvests per year can be increased from for example 4 to 5 crops in the case of the chrysanthemum.

The saving in culture volume is enormous. A culture volume of about 100 litres per m² per culture in full ground can be reduced to about 5 to 10 litres of synthetic growth substrate per m² per culture.

At the end of the culture the cutting flowers can be harvested in a way other than by means of pulling them out with root and stalk. The plants only have to be cut off above the growing slab. Occupational diseases such as "chrysanthemum arm" can thereby be avoided. It is noted that the growing slab with plant remnants thereon and therein can be recycled without problem.

The end result is therefore that not only the environmental impact but also the volume of synthetic growth substrate for recycling is reduced to a large degree.

The growing slabs according to the invention can have dimensions which are geared to manageable dimensions in plant culture. In the case of rockwool the growing slabs in a cultivating position can have a length of about 50-60 cm and multiples thereof. The breadth b of the planting surface, the surface in which the seeds or cuttings are arranged, varies from 1-10 cm, and is preferably 1.5-6 cm.

The height h generally varies between 5-10 cm.

Different ratios between the breadth b and the height h can be chosen for the various types of cutting flowers. In general the ratios lie between 1:1.2 and 1:5. Better results are obtained with a ratio which lies between 1:1.5 and 1:4. The best results can generally be obtained with a ratio lying between 1:2 and 1:3. This depends on the capillary behaviour of the growing slab with respect to the drawing up and draining of nutrient solution.

For good drainage of the growing slab during culture it can be advantageous that in the cultivating position the breadth B of the growing slab decreases from the planting surface along the height h of the growing slab. It is noted that the breadth b is the breadth of the growing slab at the level of the planting surface; the breadth B is the breadth of the growing slab from the planting surface in the direction of the bottom surface of the growing slab, wherein the growing slab is deemed in its cultivating position. The decrease in the breadth B along the height of the growing slab in the cultivating position preferably amounts to 20 to 95%. At a breadth b of the planting surface of 2 cm, this means that the breadth B at the bottom surface of the growing slab is decreased to 1.6-0.1 cm. The breadth b preferably decreases by 30-90%, and more preferably 35-80%.

For good handling of the growing slabs in the cultivating position, during transport, sprinkling and setting apart with increasing plant size, it is recommended that the growing slab be arranged in a holder.

A very favourable culture method results when the holder is placed in a holder table. The culture method can be performed in suitable manner when the holder is provided with handles with which the holder can be placed hanging in the holder table. All the growing slabs are preferably provided with nutrient solution by means of a separate supply system other than sprinkling. A good supply of medium independent of the plant size is thus ensured. The holder is therefore provided with medium feed means and medium discharge means.

Nutrient solution can now be optimally fed to and discharged from each holder with plants. This also means that less drain water has to be disinfected during recirculation. Furthermore, cross infection between holders with plants will be reduced.

Optimum collection and recirculation of nutrient medium is possible if in preference the medium discharge means comprise a downward sloping channel extending in the longitudinal direction of the holder. A structurally very suitable holder results when the channel forms a double bottom of the holder.

In order to avoid in elegant manner any disturbance in the medium feed and the medium discharge it is further recommended that the medium feed and discharge means comprise an element of mineral wool which cannot be rooted into by plant roots. Such elements are described for example in NL-89.01881.

It is recommended that heating elements are placed under the holder table which extend transversely of holders placed in the holder table. A substantially uniform, forced air flow thus takes place between plants of adjacent holders. The plants thus mutually have a substantially uniform evaporation and uniform water requirement. This results in a more uniform culture.

Mentioned and other characteristics of the present invention will be discussed hereinafter on the basis of a number of non-limiting embodiments, wherein reference is made to the annexed drawing.

In the drawing:
Figure 1 shows an exploded view of a holder with a growing slab in the cultivating position;
Figures 2 and 3 each show a different holder according to the invention;
Figure 4 shows a perspective view of a holder provided with a growing slab for placing in a holder table;
Figures 5 and 6 show top views according to the arrow V in figure 4;
Figure 7 shows a perspective view of a propagating tray according to the invention; and
Figure 8 shows a perspective view of a growing slab according to the invention intended for a propagating tray of figure 7.

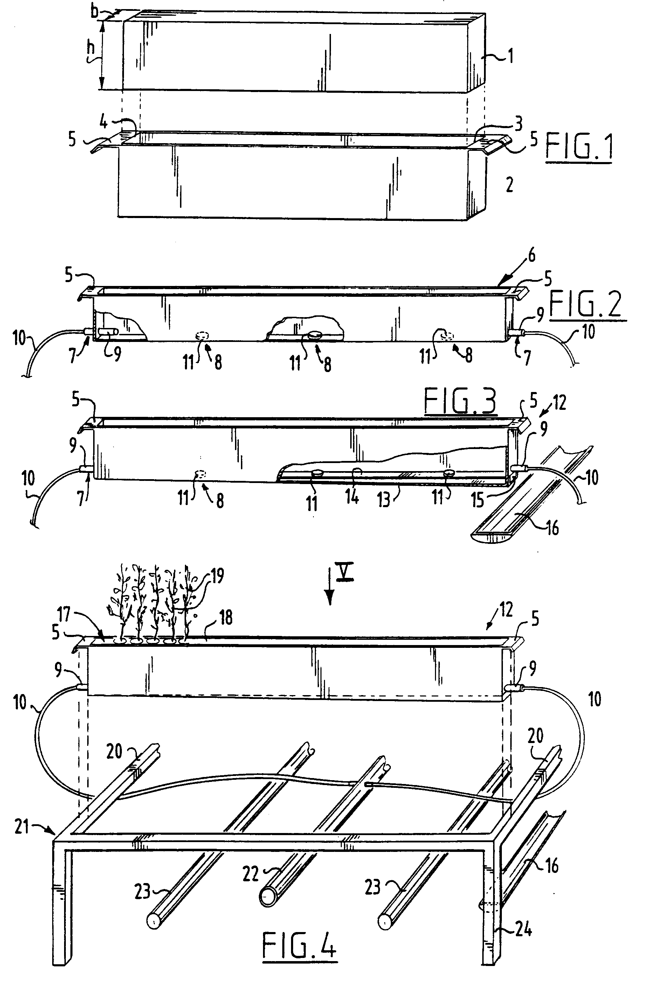

Figure 1 shows a growing slab 1 according to the invention in the cultivating position and a holder 2 intended for receiving the growing slab 1. The growing slab 1 has in the cultivating position a breadth b which is smaller than the height h. In this case the breadth b equals 2 cm and the height h equals 6 cm.

The holder 2 has internal dimensions which are substantially equal to the external dimensions for the growing slab 1. The holder is provided with handles 5 at its head ends 3 and 4.

Figure 2 shows a holder 6 for the invention which is further provided with medium feed means 7 and medium discharge means 8. The medium feed means 7 consist of plugs 9 of rockwool with a high density (for example 250 kg/m³) wherein a pressure pipe 10 debouches into the plug 9.

The discharge means 8 comprise discs 11 of mineral wool with a high density (for example 250 kg/m³). The plugs 9 and the discs 11 have a density such that they cannot be rooted into by plant roots. An undisturbed feed and discharge of medium is therefore ensured.

Figure 3 shows a holder 12 wherein a channel 13 extends at a slope in longitudinal direction beneath the holder 12. The channel 13 forms an entity with the holder 12 and receives the excess nutrient medium via the discs 11 which are arranged in the holder bottom 14. Drainage water leaves the channel 13 via the opening 15 and passes into a collecting gutter 16.

Figure 4 shows the holder 12 of figure 3 which is provided with a growing slab 17 having plants 19, in this case cutting chrysanthemums, growing out of the planting surface 18. The holder 12 is placed onto the cross beams 20 of the holder table 12 suspended on the handles 5. The pressure lines 10 are connected to a central feed conduit 22. Under the holders 12 a number of heating elements 23 extend parallel to the cross beams 20 and thus transversely of the holders 12. The collecting gutter 16 is fixed to a leg 24 of the holder table 21.

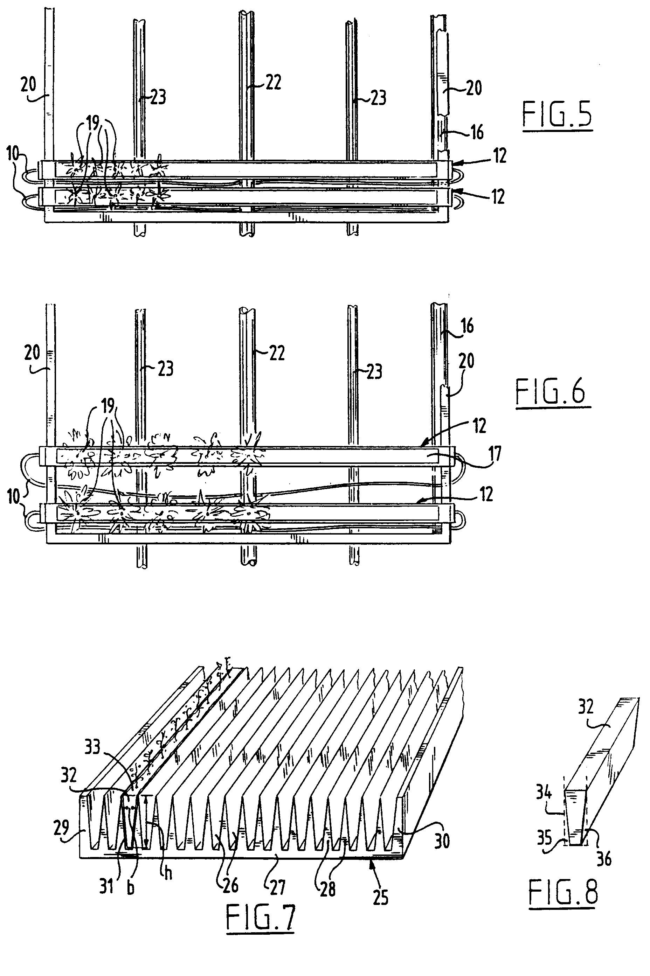

Figures 5 and 6 show the culture of figure 4 in top view. In figure 5 the holders 12 are arranged relatively closely adjacent to each other since the plants have a relatively small size. With further culture the plant size will increase and the holders 12 will be set further apart by mutual displacement along the cross beams 20.

Figure 7 shows a propagating tray 25 according to the invention. The tray comprises a number of grooves 26 which are bounded by a bottom 27 and wedge-shaped walls 28 and optionally a side wall 29 or 30. Received into a groove 31 is a growing slab 32 the breadth b of which decreases from the planting surface 33 along the height h.

Figure 8 shows the growing slab 32 in a holder 34 depicted with dashed lines. Wedge-shaped spaces 35, 36 are now created along the growing slab 32 between the growing slab 32 and holder 34 whereby a better water management is ensured in the growing slab 32.

## Claims

1. Method for culturing plants in a high plant density, in particular cut flowers such as chrysanthemums, comprising culturing the plants in an elongate growing slab, wherein in the cultivating position the breadth b of the planting surface of the growing slab is smaller than the height h of the growing slab, wherein the ratio of the breadth b to the height h lies between 1:1.2 and 1:5.

2. Method as claimed in claim 1, wherein the ratio of the breadth b to the height h lies between 1:1.5 and 1:4, and preferably between 1:2 and 1:3.

3. Method as claimed in claim 1 or 2, wherein in the cultivating position the breadth B of the growing slab decreases from the planting surface along the height h of the growing slab.

4. Method as claimed in claim 3, wherein the breadth b decreases by 20 to 95%, preferably 30 to 90%, and more preferably 35 to 80%.

5. Method as claimed in claims 1-4, wherein the growing slab is received in a holder.

6. Method as claimed in claim 5, wherein the holder is placed in a holder table.

7. Method as claimed in claim 5 or 6, wherein the holder is provided with handles with which the holder is placed suspended in the holder table.

8. Method as claimed in claims 5-7, wherein the holder is provided with medium feed means and with medium discharge means.

9. Method as claimed in claim 8, wherein the medium discharge means comprise a downward sloping channel extending in longitudinal direction of the holder.

10. Method as claimed in claim 9, wherein the channel forms a double bottom of the holder.

11. Method as claimed in claims 8-10, wherein the medium feed and discharge means comprise an element of mineral wool which cannot be rooted into by plant roots.

12. Method as claimed in claims 6-11, wherein heating elements are placed under the table which extend transversely of holders placed in the holder table.

13. Method as claimed in claims 1-12, wherein the growing slab is manufactured from mineral wool, preferably rockwool.

## Patentansprüche

1. Verfahren zur Aufzucht von Pflanzen in einer großen Pflanzendichte, insbesondere Schnittblumen wie Chrysanthemen, bei dem die Pflanzen in einem langgestreckten Aufwuchsstück aufgezogen werden, dessen Breite b der Bepflanzungsfläche in der Aufzuchtposition kleiner ist als die Höhe h des Aufwuchsstücks, wobei das Verhältnis der Breite b zu der Höhe h zwischen 1:1,2 und 1:5 liegt.

2. Verfahren nach Anspruch 1, wobei das Verhältnis der Breite b zu der Höhe h zwischen 1:1,5 und 1:4, und insbesondere zwischen 1:2 und 1:3 liegt.

3. Verfahren nach Anspruch 1 oder 2, wobei in der Aufzuchtposition die Breite B des Aufwuchsstückes von der Bepflanzungsfläche mit der Höhe h des Aufwuchsstücks abnimmt.

4. Verfahren nach Anspruch 3, wobei die Breite b um 20 bis 95 %, bevorzugt um 30 bis 90 %, und besonders bevorzugt um 35 bis 80 % abnimmt.

5. Verfahren nach Ansprüchen 1 bis 4, wobei das Aufwuchsstück in einer Halterung aufgenommen wird.

6. Verfahren nach Anspruch 5, wobei die Halterung in einem Halterungstisch angeordnet ist.

7. Verfahren nach Anspruch 5 oder 6, wobei die Halterung mit Griffen versehen ist, mittels welchen die Halterung hängend in dem Halterungstisch angeordnet wird.

8. Verfahren nach Ansprüchen 5 bis 7, wobei die Halterung mit Mitteln zur Nährstoffzufuhr und mit Mitteln zum Nährstoffabfluß versehen ist.

9. Verfahren nach Anspruch 8, wobei die Mittel zum Nährstoffabfluß einen abwärts geneigten Kanal umfassen, der sich entlang der Längsrichtung der Halterung erstreckt.

10. Verfahren nach Anspruch 9, wobei der Kanal einen doppelten Boden der Halterung bildet.

11. Verfahren nach Ansprüchen 8 bis 10, wobei die Mittel zur Nährstoffzufuhr und zum Nährstoffabfluß ein Element aus Mineralwolle umfassen, in welches von Pflanzenwurzeln nicht eingewurzelt werden kann.

12. Verfahren nach Ansprüchen 6 bis 11, wobei Heizelemente unterhalb des Tisches angeordnet sind, die quer zu den in dem Halterungstisch angeordneten Halterungen verlaufen.

13. Verfahren nach Ansprüchen 1 bis 12, wobei das Aufwuchsstück aus Mineralwolle, insbesondere aus Steinwolle, hergestellt ist.

## Revendications

1. Procédé pour cultiver des plantes avec une haute densité de plantes en particulier des fleurs coupées telles que des chrysantèmes, comprenant la culture de plantes dans une tranche de croissance allongée, où dans la position de culture la largeur b de la surface de plantation de la tranche de croissance est inférieure à la hauteur h de la tranche de croissance, où le rapport de la largeur b à la hauteur h se situe entre 1:1,2 et 1:5.

2. Procédé selon la revendication 1, dans lequel le rapport de la largeur b à la hauteur h se situe entre 1:1,5 et 1:4, de préférence entre 1:2 et 1:3.

3. Procédé selon la revendication 1 ou 2, dans lequel dans la position de culture, la largeur B de la tranche de croissance diminue à partir de la surface de plantation le long de la hauteur h de la tranche de croissance.

4. Procédé selon la revendication 3, dans lequel la largeur b diminue de 20 à 95 %, de préférence de 30 à 90 % et mieux encore de 35 à 80 %.

5. Procédé selon les revendications 1 à 4, dans lequel la tranche de culture est reçue dans un récipient.

6. Procédé selon la revendication 5, dans lequel le récipient est placé dans une table de réception.

7. Procédé selon la revendication 5 ou 6, dans lequel le récipient est muni de poignées avec lesquelles le récipient est placé suspendu dans la table de réception.

8. Procédé selon les revendications 5 à 7, dans lequel le récipient est de moyens d'alimentation en milieu et de moyens de décharge de milieu.

9. Procédé selon la revendication 8, dans lequel les moyens de décharge de milieu comprennent un canal incliné vers le bas s'étendant dans une direction longitudinale du récipient.

10. Procédé selon la revendication 9, dans lequel le canal forme un double fond du récipient.

11. Procédé selon les revendications 8 à 10, dans lequel les moyens de décharge et d'alimentation en milieu comprennent un élément de laine minérale qui ne peut pas être enraciné par les racines des plantes.

12. Procédé selon les revendications 6 à 11, dans lequel des éléments de chauffage sont placés sous la table et s'étendent transversalement par rapport aux récipients placés dans la table de réception.

13. Procédé selon les revendications 1 à 12, dans lequel la tranche de croissance est fabriquée en laine minérale, de préférence en laine de roche.
